# EUROPEAN PATENT APPLICATION

(11) **EP 4 434 793 A1**
(43) Date of publication of application: **25.09.2024**
(21) Application number: 23163128.4
(22) Date of filing: 21.03.2023
(51) Int. Cl.: B60K 37/06

(54) **DASHBOARD ASSEMBLY FOR A VEHICLE AND COVER PART FOR A DASHBOARD ASSEMBLY**

(71) Applicant: Volvo Car Corporation, 405 31 Göteborg (SE)
(72) Inventor: MÜLLER, Patrik, 40531 Göteborg (SE); ANDERSSON, Johan, 40531 Göteborg (SE); ROJO, Lorena, 40531 Göteborg (SE); ALLIOT, Clément, 40531 Göteborg (SE)
(74) Representative: Maiwald GmbH

(57) **Abstract**

The disclosure relates to a dashboard assembly (10) for a vehicle. The dashboard assembly (10) comprises a dashboard body (12) and a steering column unit (14). The steering column unit (14) extends along a steering column axis (A). The steering column unit (14) is adjustable with respect to the dashboard body (12) along a first adjustment direction (D1) extending in parallel to the steering column axis (A) and along a second adjustment direction (D2) extending perpendicular to the steering column axis (A). The dashboard assembly (10) further comprises a cover part (20). The cover part (20) is movably connected to the steering column unit (14) and movably connected to the dashboard body (12). Furthermore, a cover part (20) for such a dashboard assembly (10) is presented. The cover part (20) comprises a first coupling interface (30) being configured to movably connect the cover part (20) to the steering column unit (14). The cover part (20) also comprises a second coupling interface (46) being configured to movably connect the cover part (20) to the dashboard body (12).

## Description

The present disclosure relates to a dashboard assembly for a vehicle.

The present disclosure is further directed to a cover part for such a dashboard assembly.

In vehicles, e.g. cars, busses and trucks, dashboard assemblies are used as central units of a passenger compartment carrying a plurality of driver information means such as analogue and digital displays and a plurality of control means such as switches and sliders. The steering column having a steering wheel at its end usually sticks out of the dashboard assembly.

Even though the driver information means and the control means essentially are technical installations, dashboard assemblies are usually designed in a manner that is visually pleasant for a user of the corresponding vehicle, e.g. the driver. To this end, various cover parts are used. The cover parts, thus, hide at least a part of the technical installations of the dashboard assembly. As a consequence thereof, a user of the vehicle visually perceives the cover part instead of the technical installations behind the cover part.

A further function of such cover parts is the protection of the technical installations of the dashboard assembly. In this context, cover parts are used for making the technical installations inaccessible by human hands. Moreover, cover parts protect the technical installations with respect to dirt, dust and humidity that may be present in the passenger compartment.

It is an objective of the present disclosure to further improve the protection of technical installations in a dashboard assembly.

The problem is at least partially solved or alleviated by the subject matter of the independent claims of the present disclosure, wherein further examples are incorporated in the dependent claims.

According to a first aspect, there is provided a dashboard assembly for a vehicle. The dashboard assembly comprises a dashboard body and a steering column unit. The steering column unit extends along a steering column axis. The steering column unit is adjustable with respect to the dashboard body along a first adjustment direction extending in parallel to the steering column axis and along a second adjustment direction extending perpendicular to the steering column axis. The dashboard assembly further comprises a cover part. The cover part is movably connected to the steering column unit and movably connected to the dashboard body. Thus, by adjusting the steering column unit along the first adjustment direction, a distance between a steering wheel being provided at an end of the steering column unit and the driver may be adjusted. This means that the steering wheel can be positioned close to the driver or further away from the driver. In a mounted state of the dashboard assembly, the second adjustment direction may extend vertically. Thus, by adjusting the steering wheel column unit along the second adjustment direction, a position of the steering wheel along a height direction of the dashboard assembly and, thus, of the vehicle in which the dashboard assembly is used, may be adjusted. Due to the fact that the cover part is movably connected to both the steering column unit and the dashboard body, a gap between the steering column unit and the dashboard body is covered by the cover part independent from an adjustment position of the steering column unit. This applies to both the first adjustment direction and the second adjustment direction. The gap may occur due to the adjustment of the steering column unit. A size of the gap may vary as a function of the adjustment position of the steering column unit. Consequently, the technical installations of the dashboard assembly are well protected independent from an adjustment position of the steering column unit. At the same time, a user of the dashboard assembly, e.g. a driver, is not able to see into the interior of the dashboard assembly since this view is obstructed by the cover part. This enhances the quality perception of the user.

In an example, the cover part comprises a connection interface for connecting a functional part to the cover part. Thus, the cover part has two functionalities. A first functionality relates to covering the gap between the steering column unit and the dashboard body. The second functionality relates to holding the functional part. Consequently, in this example, the cover part may also be called a carrier part. This double functionality renders the dashboard assembly compact. Moreover, the connection interface offers the possibility to locate a functional part in a region between the steering column unit and the dashboard body. This region is located in the field of view of a driver when the driver is in a standard driver position. Thus, functional parts connected to the cover part are easily accessible by the driver. This means that the driver can easily see and/or use the functional parts being connected to the cover part.

In an example, the functional part comprises a camera unit. The camera unit is connected to the cover part via the connection interface. Since the cover part is located in an interior of a vehicle, the camera unit may be designated as an interior camera unit. Such a camera unit may be used for driver monitoring. Then, the camera unit may be called a driver monitoring camera unit. Using the cover part as a carrier part for the camera unit renders the dashboard assembly compact. Furthermore, the fact that the cover part is movably connected to both the steering column unit and the dashboard body not only has the effect that the gap between the steering column unit and the dashboard is covered independent from an adjustment position of the steering column unit. Additionally, a position of the camera unit is adjusted in accordance with an adjustment position of the steering column unit. This is especially advantageous if the camera unit is a driver monitoring camera unit, since such an adjustment ensures that the driver is always located in the field of view of the driver monitoring camera unit. Thus, the driver monitoring camera unit may be operated in a very reliable manner.

In an example, the functional part comprises a display unit. The display unit is connected to the cover part via the connection interface. Also in this example, using the cover part as a carrier part for the display unit renders the dashboard assembly compact. Furthermore, the fact that the cover part is movably connected to both the steering column unit and the dashboard body not only has the effect that the gap between the steering column unit and the dashboard is covered independent from an adjustment position of the steering column unit. Additionally, a position of the display unit is adjusted in accordance with an adjustment position of the steering column unit. Such an adjustment ensures that the driver is always able to comfortably see the display unit.

In an example, the functional part comprises a ventilation nozzle part. The ventilation nozzle part is connected to the cover part via the connection interface. Also in this case, using the cover part as a carrier part for the ventilation nozzle part renders the dashboard assembly compact. It is understood that in this example, the cover part comprises at least one air duct ending in the ventilation nozzle part or a connection interface for being connected to an air duct. Furthermore, the fact that the cover part is movably connected to both the steering column unit and the dashboard body not only has the effect that the gap between the steering column unit and the dashboard is covered independent from an adjustment position of the steering column unit. Additionally, a position of the ventilation nozzle part is adjusted in accordance with an adjustment position of the steering column unit. Thus, the ventilation nozzle part may always be directed towards the driver. This enhances the comfort of the driver.

In an example, a surface of the cover part being oriented towards the steering column unit at least partially follows the outer form of the steering column unit. This means that the surface of the cover part essentially has the same shape as the portion of the steering column unit to which it is oriented. In this context, the cover part may fully or partially about against an outer circumference of the steering column unit. Alternatively, a very small gap may be provided between the steering column unit and the cover part. This gap is very small especially when being compared to a potential gap between the steering column unit and the dashboard body that would be visible without the cover part. Thus, the technical installations of the dashboard assembly are particularly well protected.

In an example, the dashboard assembly further comprises a biasing means biasing the cover part towards the steering column unit. This ensures that the cover part always at least partially abuts against the steering column unit or that a particularly small gap between the cover part and the steering column unit is maintained. Altogether, the technical installations of the dashboard assembly are particularly well protected.

In an example, the cover part and the steering column unit are translatorily movable with respect to one another. More precisely, the cover part and the steering column unit are only translatory movable with respect to each other. The direction of translatory movement may be oriented in parallel to the steering column axis. Thus, a relative movement between the cover part and the steering column unit is only possible in a direction parallel to the steering column axis. This has the effect that a gap between the cover part and a steering column unit is kept very small.

In an example, the steering column unit comprises a guide rail and the cover part comprises an engagement element. The engagement element is located in the guide rail such that the engagement element is translatorily movable along a guide rail direction. Alternatively, the cover part comprises a guide rail and the steering column unit comprises an engagement element. Also in this alternative, the engagement element is located in the guide rail such that the engagement element is translatorily movable along a guide rail direction. In other words, the translatory movability of the cover part with respect to the steering column unit is realized by a guide rail arrangement. The guide rail arrangement may be provided in two kinematic alternatives. Both alternatives are structurally simple and reliable in operation.

In an example, the cover part comprises at least two engagement elements being arranged at a distance from each other. The at least two engagement elements are located in the guide rail such that the at least two engagement elements are translatorily movable along a guide rail direction. Alternatively, the steering column unit comprises at least two engagement elements being arranged at a distance from each other. Also in this alternative, the at least two engagement elements are located in the guide rail such that the at least two engagement elements are translatorily movable along a guide rail direction. Using at least two engagement elements located at a distance instead of only one engagement element has the effect that a rotation around one of the engagement elements is blocked by the respective other engagement element. Thus the at least two engagement elements ensure that the cover part and the steering column unit may move relative to each other in a purely translatory manner.

In an example, the guide rail comprises a push-out ramp at one end of the guide rail. The push-out ramp is oriented towards the part comprising the engagement element. This means that the engagement element may be pushed out of the guide rail when reaching the push-out ramp. As a consequence thereof, the part comprising the guide rail and the part comprising the engagement element may be disconnected. In a case in which the engagement element is provided on the cover part, the cover part is pushed away from the steering column unit if the engagement element reaches the push-out ramp. Alternatively, in a case in which the engagement element is provided on the steering column unit, the steering column unit is pushed away from the cover part if the engagement element reaches the push-out ramp. It is understood, that these movements are purely relative movements. Such a configuration is helpful in a crash situation of the vehicle. In such a situation, uncoupling the steering column unit from the cover part may allow the steering column unit to retract further into the dashboard body than otherwise would have been possible considering the extension of the guide rail. This enhances road safety.

In another example, the guide rail comprises a mounting slope. In a case in which the guide rail also comprises a push-out ramp, the mounting slope and the push-out ramp are arranged at opposite ends of the guide rail. Using the mounting slope, arranging the engagement element inside the guide rail is facilitated.

In an example, the cover part and the dashboard body are translatorily movable with respect to one another. Additionally, the cover part and the dashboard body are rotatably movable with respect to one another. More precisely, the cover part and the dashboard body are translatorily movable with respect to each other along one single direction. An axis of rotation around which the cover part and the dashboard body may rotate with respect to each other may be arranged perpendicular to the direction of translatory movement. Thus, the cover part may rotate and translate relative to the dashboard body. This has the effect that independent from an adjustment position of the steering column unit, the cover part covers technical installations in the interior of the dashboard assembly.

In an example, the dashboard body comprises a guide slot and the cover part comprises an engagement protrusion. The engagement protrusion is located in the guide slot such that the engagement protrusion is translatorily movable along a guide slot direction and rotatable around an engagement protrusion axis. Alternatively, the cover part comprises a guide slot and the dashboard body comprises an engagement protrusion. Also in this alternative, the engagement protrusion is located in the guide slot such that the engagement protrusion is translatorily movable along a guide rail direction and rotatable around an engagement protrusion axis. In other words, the translatory movability of the cover part with respect to the dashboard body is realized by a guide slot arrangement. The guide slot arrangement may be provided in two kinematic alternatives. Both alternatives are structurally simple and reliable in operation.

It is noted that the present disclosure uses the terms guide rail and engagement element when referring to a guide rail arrangement coupling the cover part and the steering column unit such that they may move relative to each other in one translatory direction only. In connection with the guide slot arrangement, the terms guide slot and engagement protrusion are used. The guide slot arrangement couples the cover part and the dashboard body such that they may move relative to each other in one translatory direction and such that they may rotate relative to each other. However, the different terms guide rail and guide slot are only used in order to be able to better distinguish between the different arrangements. From a technical point of view, the terms guide rail and guide slot are synonyms. The same applies to the different terms engagement element and engagement protrusion which are also used in order to be able to better distinguish between the different arrangements. From a technical point of view, also the terms engagement element and engagement protrusion are synonyms.

In an example, the guide slot direction and the guide rail direction are non-parallel. This has the effect that the cover part being movably connected to both the dashboard body and the steering column unit does not hinder a relative movement of the steering column unit with respect to the dashboard body.

In an example, the guide rail direction and the guide slot direction extend substantially perpendicular, i.e. they enclose an angle of substantially 90°. This configuration allows for a particularly smooth relative movement of the steering column unit with respect to the dashboard body.

According to a second aspect, there is provided a cover part for a dashboard assembly of the present disclosure. The cover part comprises a first coupling interface being configured to movably connect the cover part to the steering column unit. Moreover, the cover part comprises a second coupling interface being configured to movably connect the cover part to the dashboard body. Such a cover part allows to reliably cover a gap between a steering column unit and a dashboard body independent from an adjustment position of the steering column unit, i.e. independent from a relative position of the steering column unit with respect to the dashboard body.

It should be noted that the above examples may be combined with each other irrespective of the aspect involved. Accordingly, features, effects and advantages that are mentioned in connection with the dashboard assembly apply mutatis mutandis to the cover part. Likewise, features, effects and advantages that are mentioned in connection with the cover part apply mutatis mutandis to the dashboard assembly.

These and other aspects of the present disclosure will become apparent from and elucidated with reference to the examples described hereinafter.

Examples of the disclosure will be described in the following with reference to the following drawings.
- Figure 1: shows a dashboard assembly according to the present disclosure comprising a cover part according to the present disclosure, wherein a steering column unit is in a first adjustment position,
- Figure 2: shows the dashboard assembly of Figure 1 in a sectional view in plane II of Figure 1,
- Figure 3: illustrates the kinematic working principle of the dashboard assembly of Figures 1 and 2 in simplified sketch,
- Figure 4: shows the dashboard assembly of Figures 1 to 3, wherein the steering column unit is in a third adjustment position, and
- Figure 5: shows the dashboard assembly of Figures 1 to 4, wherein the steering column unit is in a fourth adjustment position.

The Figures are merely schematic representations and serve only to illustrate examples of the disclosure. Identical or equivalent elements are in principle provided with the same reference signs.

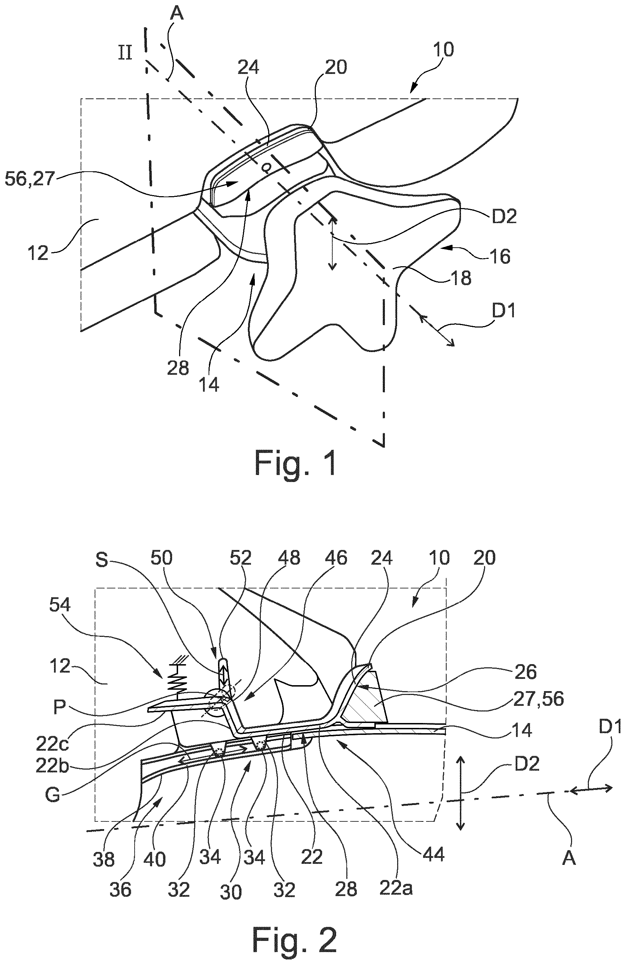

Figure 1 shows dashboard assembly 10 for a vehicle.

The dashboard assembly 10 comprises a dashboard body 12 and a steering column unit 14.

The steering column unit 14 is represented in a simplified form. This means that components of the steering column unit 14 which are not necessary for the following explanations are not represented.

At an end of the steering column unit 14 being oriented towards a driver position, a steering wheel 16 is provided. For reasons of better visibility, only a central portion 18 of the steering wheel 16 is represented. A steering wheel rim is not shown.

The steering column unit 14 is adjustable.

This means that the steering column unit 14 can be adjusted along a steering column axis A which is an axis of longitudinal extension of the steering column unit 14.

In other words, the steering column unit 14 is adjustable a long a first adjustment direction D 1 extending in parallel to the steering column axis A.

By adjusting the steering column unit 14 along the first adjustment direction D1, a position of the steering wheel 16 along the steering column axis A may be adjusted.

Moreover, the steering column unit 14 is adjustable along a second adjustment direction D2. The second adjustment direction D2 extends substantially perpendicular to the steering column axis A. Consequently, the second adjustment direction D2 also extends substantially perpendicular to the first adjustment direction D1. Moreover, the second adjustment direction D2 extends substantially vertical if the dashboard assembly 10 is mounted in a vehicle.

By adjusting the steering column unit 14 along the second adjustment direction D2, a position of the steering wheel 16 in a height direction of the dashboard assembly 10 and/or the vehicle may be adjusted.

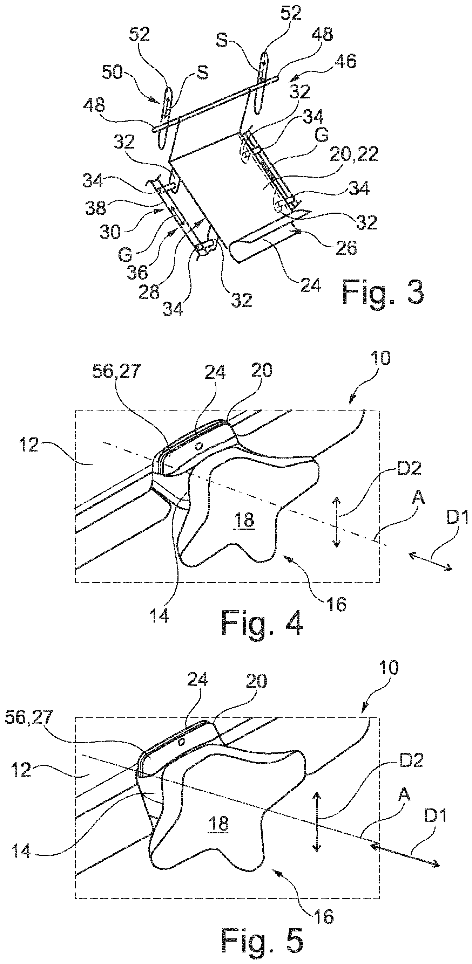

The dashboard assembly 10 additionally comprises a cover part 20. The cover part 20 is movably connected to the steering column unit 14. Additionally, the cover part 20 is movably connected to the dashboard body 12 as will be explained in more detail further below with reference to Figures 2 and 3.

It is noted that Figure 3 shows the dashboard assembly in a highly abstracted form in order to illustrate the working principle. In this context, only the slots 52 of the dashboard body 12 are shown and not the dashboard body in its entirety. Analogously, only the guide rails 38 are shown and not the steering column unit 14 in its entirety.

The cover part 20 comprises a main body 22. The main body 22 is composed of three plate-shaped main body portions 22a, 22b, 22c which are arranged in a step-shape.

At a first end of the main body 22, a shielding portion 24 is provided. As will be explained in more detail further below, the shielding portion 24 comprises a connection interface 26 for connecting a functional part 27 to the cover part 20.

At a second end of the main body 22 which is arranged opposite to the first end of the main body 22, a reinforcement element is provided. The reinforcement element is also plate-shaped and is arranged substantially perpendicular to both the main body portions 22b and 22c.

Moreover, the main body portion 22 comprises a surface 28 which is oriented towards the steering column unit 14. The surface 28 follows the outer form of the steering column unit 14 such that in the present example, the surface 28 extends at a substantially constant distance of a few millimeters only along the outer contour of the steering column unit 14.

Moreover, the cover part 20 comprises a first coupling interface 30 being configured to movably connect the cover part 20 to the steering column unit 14.

The first coupling interface 30 comprises a total of four protrusions 32 extending from the main body portion 22a towards the steering column unit 14.

Two of the protrusions 32 are arranged on a first side of the main body portion 22a. This side is visible in the sectional view of Figures 2. The two protrusions 32 of the first side are arranged at a distance from one another. Moreover, at an end of each protrusion 32, there is provided an engagement element 34 which extends substantially in parallel to the main body portion 22a. In the representation of Figures 2, the engagement element 34 points into the drawing plane.

The two remaining protrusions 32 are arranged on a second side of the main body portion 22a which is arranged opposite the first side of the main body portion 22a. The protrusions 32 on the second side also carry engagement elements 34. Moreover, the protrusions 32 and the engagement elements 34 thereof are arranged in a symmetric manner with respect with respect to the protrusions 32 on the first side (cf. Figure 3). In the sectional view of Figure 2 these protrusions 32 and engagement elements 34 are not visible.

The steering column unit 14 comprises a cover part coupling interface 36.

The cover part coupling interface 36 comprises two guide rails 38, wherein in the sectional view of Figure 2 only one guide rail 38 is visible.

The guide rail 38 comprises a central portion 40. At the end of this central portion 40 which is oriented towards the dashboard body 12, a mounting slope 42 is provided.

At an end of the central portion 40 which is oriented towards the steering wheel 16, a push-out ramp 44 is arranged.

The engagement elements 34 which are arranged on the first side of the main body portion 22 a are located in the guide rail 38.

The engagement elements 34 which are arranged on the second side of the main body portion 22 a are located in a guide rail 38 which is arranged symmetrically with respect to the guide rail as shown in Figures 2 (see also Figure 3).

Consequently, the 4 engagement elements 34 may be translated along the guide rails 38. This allows the cover part 20 and the steering column unit 14 to move relative to each other in a translatory manner.

It is understood that in an alternative, the movable connection between the cover part 20 and the steering column units 14 may be kinematically inverted. In this alternative, the guide rails 38 are arranged on the main body 22 of the cover part 20 and the protrusions 32 with the engagement elements 34 are located on the steering column unit 14.

The cover part 20 additionally comprises a second coupling interface 46 being configured to movably connect the cover part 20 to the dashboard body 12.

The second coupling interface 46 comprises two engagement protrusions 48 which are formed as pins extending laterally from the main body 22 of the cover part 20. The engagement protrusions 48 extends from opposite lateral sides of the main body 22 (cf. Figure 3). Both engagement protrusion 48 extend substantially in parallel to the main body portion 22b and 22c. As before, only one engagement protrusion 48 is visible in the sectional view of Figure 2.

The dashboard body 12 comprises a cover part coupling interface 50. The cover part coupling interface 50 comprises two guide slots 52.

In a mounted condition of the dashboard body 12, the guide slots 52 extend substantially vertically.

Moreover, the guide slots 52 are arranged such that one of the engagement protrusions 48 extends into each of the guide slots 52.

Since the engagement protrusions 48 have a substantially circular cross-section, the engagement protrusions 48 may be rotated within the corresponding guide slot 52 and may as well be moved translatorily along a guide slot direction S of the corresponding guide slot 52.

Consequently, the cover part 20 and the dashboard body 12 are translatorily movable with respect to one another. Additionally, the cover part and the dashboard body 12 are rotatably movable with respect to one another.

It is understood that in an alternative, the movable connection between the cover part 20 and the dashboard body 12 may be kinematically inverted. In this alternative, the guide slots 52 are arranged on the main body 22 of the cover part 20 and the engagement protrusions 48 are located on the dashboard body 12.

As is visible from Figures 2 and 3, the guide slot direction S and the guide rail direction G are non-parallel.

Consequently, the following movement characteristics of the dashboard assembly 10 may be realized.

If the steering column unit 14 is moved further towards a driver starting from the position as represented in Figures 1 and 2, the cover part 20 and the steering column unit 14 move relative to each other in a translatory manner. This is the case since the engagement protrusions 48 are not able to move along a transverse direction of the corresponding guide slots 52. Consequently, the cover part 20 is not able to move in a direction parallel to the steering column axis A.

The first coupling interface 30 of the cover part 20 and the cover part coupling interface 36 of the steering column unit 14 allow the steering column unit 14 to translate along the steering column axis A while the cover part 20 standing still.

The same applies if the steering column unit 14 is moved towards the dashboard body 12 out of the position as shown in Figures 1 and 2.

In a case in which the steering column unit 14 is moved upwards, the engagement protrusions 48 may move within the corresponding guide slots 52. Thus, the cover part 20 may move relative to the dashboard body 12 in a vertical direction. However, the cooperation between the first coupling interface 30 of the cover part 20 and the cover part coupling interface 36 of the steering column unit 14 does not allow for a relative movement in the height direction between the cover part 20 and the steering column unit 14. Consequently, the cover part 20 will move upwards together with the steering column unit 14.

The same applies, if the steering column unit 14 is moved vertically downwards.

Figure 4 shows the dashboard assembly 10, wherein the steering column unit 14 is in an adjustment position in which the steering wheel 16 has been moved upwards with respect to the position as shown in Figures 1 and 2.

Figure 5 shows the dashboard assembly 10, wherein the steering column unit 14 is in an adjustment position in which the steering wheel 16 has been moved further upwards with respect to Figure 4.

In a crash situation of the vehicle being equipped with the dashboard assembly 10, the steering column unit 14 may be moved towards the dashboard body 12 to a larger extent than in a usual adjustment procedure of the steering column unit 14. In this situation, the engagement elements 34of the first coupling interface 30 of the cover part 20 may reach the push-out ramp 44 of the corresponding guide rails 38. This has the effect that the cover part 20 is pushed vertically upwards, thereby liberating additional range of motion for the steering column unit 14. In other words, the cover part 20 may be moved of the of the way such that the steering column unit 14 may move further towards the dashboard body 12 or into the dashboard body 12.

As an optional feature, the dashboard assembly 10 comprises a biasing means 54 such as a spring biasing the cover part 20 towards the steering column unit 14.

The biasing means 54 may have a first end being connected to the dashboard body 12 and the second end being connected to the cover part 20.

Using such a biasing means 54 avoids rattling and other noises which might occur due to play effects inside the dashboard assembly 10.

As has been mentioned before, the cover part 20 comprises a connection interface 26 which is configured for connecting a functional part 27 to the cover part 20.

In the present example, the functional part 27 comprises a camera unit 56. More precisely, the camera unit 56 is a driver monitoring camera unit.

In an alternative, the functional part 27 is a display unit. Thus, in this alternative, instead of the camera unit 56 a display unit is connected to the connection interface 26.

It is also possible to have the two above alternatives combined, i.e. to connect both the camera unit 56 and a display unit to the connection interface 26.

In a further alternative, the functional part 27 comprises a ventilation nozzle part being connected to the connection interface 26. It is understood that in this case the cover part 22 comprises a ventilation duct or needs to be connected to a ventilation duct.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: dashboard assembly
- 12: dashboard body
- 14: steering column unit
- 16: steering wheel
- 18: central portion of the steering wheel
- 20: cover part
- 22: main body
- 22a: main body portion
- 22b: main body portion
- 22c: main body portion
- 24: shielding portion
- 26: connection interface
- 27: functional part
- 28: surface
- 30: first coupling interface of the cover part
- 32: protrusion
- 34: engagement element
- 36: cover part coupling interface of the steering column unit
- 38: guide rail
- 40: central portion
- 42: mounting slope
- 44: push-out ramp
- 46: second coupling interface of the cover part
- 48: engagement protrusion
- 50: cover part coupling interface of the dashboard body
- 52: guide slot
- 54: biasing means
- 56: camera unit
- A: steering column axis
- D1: first adjustment direction
- D2: second adjustment direction
- G: guide rail direction
- S: guide slot direction
- P: engagement protrusion axis

## Claims

1. A dashboard assembly (10) for a vehicle, comprising
a dashboard body (12) and a steering column unit (14), the steering column unit (14) extending along a steering column axis (A), wherein the steering column unit (14) is adjustable with respect to the dashboard body (12) along a first adjustment direction (D1) extending in parallel to the steering column axis (A) and along a second adjustment direction (D2) extending perpendicular to the steering column axis (A), and a cover part (20), wherein the cover part (20) is movably connected to the steering column unit (14) and movably connected to the dashboard body (12).

2. The dashboard assembly (10) of claim 1, wherein the cover part (20) comprises a connection interface (26) for connecting a functional part (27) to the cover part (20).

3. The dashboard assembly (10) of claim 1 or 2, wherein the functional part comprises a camera unit (56) and wherein the camera unit (56) is connected to the cover part (20) via the connection interface (26).

4. The dashboard assembly (10) of any one of the preceding claims, wherein the functional part (27) comprises a display unit and wherein the display unit is connected to the cover part (20) via the connection interface (26).

5. The dashboard assembly (10) of any one of the preceding claims, wherein the functional part (27) comprises a ventilation nozzle part and wherein the ventilation nozzle part is connected to the cover part (20) via the connection interface (26).

6. The dashboard assembly (10) of any one of the preceding claims, wherein a surface (28) of the cover part (20) being oriented towards the steering column unit (14) at least partially follows the outer form of the steering column unit (14).

7. The dashboard assembly (10) of any one of the preceding claims, further comprising a biasing means (54) biasing the cover part (20) towards the steering column unit (14).

8. The dashboard assembly (10) of any one of the preceding claims, wherein the cover part (20) and the steering column unit (14) are translatorily movable with respect to one another.

9. The dashboard assembly (10) of claim 8,
wherein the steering column unit (14) comprises a guide rail (38) and the cover part (20) comprises an engagement element (34), wherein the engagement element (34) is located in the guide rail (38) such that the engagement element (34) is translatorily movable along a guide rail direction, or
wherein the cover part (20) comprises a guide rail (38) and the steering column unit (14) comprises an engagement element (34), wherein the engagement element (34) is located in the guide rail (38) such that the engagement element (34) is translatorily movable along a guide rail direction (G).

10. The dashboard assembly (10) of claim 9, wherein the cover part (20) comprises at least two engagement elements (34) being arranged at a distance from each other, wherein the at least two engagement elements (34) are located in the guide rail (38) such that the at least two engagement elements (34) are translatorily movable along a guide rail direction (G), or
wherein the steering column unit (14) comprises at least two engagement elements (34) being arranged at a distance from each other, wherein the at least two engagement elements (34) are located in the guide rail (38) such that the at least two engagement elements (34) are translatorily movable along a guide rail direction (G).

11. The dashboard assembly (10) of claim 9 or 10, wherein the guide rail (38) comprises a push-out ramp (44) at one end of the guide rail (38), wherein the push-out ramp (44) is oriented towards the part comprising the engagement element (34).

12. The dashboard assembly (10) of any one of the preceding claims, wherein the cover part (20) and the dashboard body (12) are translatorily movable with respect to one another and wherein the cover part (20) and the dashboard body (12) are rotatably movable with respect to one another.

13. The dashboard assembly (10) of claim 12,
wherein the dashboard body (12) comprises a guide slot (52) and the cover part (20) comprises an engagement protrusion (48), wherein the engagement protrusion (48) is located in the guide slot (52) such that the engagement protrusion (48) is translatorily movable along a guide slot direction (S) and rotatable around an engagement protrusion axis (P), or
wherein the cover part (20) comprises a guide slot (52) and the dashboard body (12) comprises an engagement protrusion (48), wherein the engagement protrusion (48) is located in the guide slot (52) such that the engagement protrusion (48) is translatorily movable along a guide slot direction (S) and rotatable around an engagement protrusion axis (P).

14. The dashboard assembly (10) of any one of claims 12 and 13 and of any one of claims 8 to 11, wherein the guide slot direction (S) and the guide rail direction (G) are non-parallel.

15. A cover part (20) for a dashboard assembly (10) of any one of the preceding claims,
wherein the cover part (20) comprises a first coupling interface (30) being configured to movably connect the cover part (20) to the steering column unit (14) and wherein the cover part (20) comprises a second coupling interface (46) being configured to movably connect the cover part (20) to the dashboard body (12).

## Amended claims

### Amended claims in accordance with Rule 137(2) EPC.

1. A dashboard assembly (10) for a vehicle, comprising
a dashboard body (12) and a steering column unit (14), the steering column unit (14) extending along a steering column axis (A), wherein the steering column unit (14) is adjustable with respect to the dashboard body (12) along a first adjustment direction (D1) extending in parallel to the steering column axis (A) and along a second adjustment direction (D2) extending perpendicular to the steering column axis (A), and a cover part (20), wherein the cover part (20) is movably connected to the steering column unit (14) and movably connected to the dashboard body (12), wherein the cover part (20) comprises a connection interface (26) for connecting a functional part (27) to the cover part (20),
**characterized in that** the functional part comprises a camera unit (56), wherein the camera unit (56) is connected to the cover part (20) via the connection interface (26) and/or **in that** the functional part (27) comprises a ventilation nozzle part, wherein the ventilation nozzle part is connected to the cover part (20) via the connection interface (26).

2. The dashboard assembly (10) of any one of the preceding claims, wherein the functional part (27) comprises a display unit and wherein the display unit is connected to the cover part (20) via the connection interface (26).

3. The dashboard assembly (10) of any one of the preceding claims, wherein a surface (28) of the cover part (20) being oriented towards the steering column unit (14) at least partially follows the outer form of the steering column unit (14).

4. The dashboard assembly (10) of any one of the preceding claims, further comprising a biasing means (54) biasing the cover part (20) towards the steering column unit (14).

5. The dashboard assembly (10) of any one of the preceding claims, wherein the cover part (20) and the steering column unit (14) are translatorily movable with respect to one another.

6. The dashboard assembly (10) of claim 5,
wherein the steering column unit (14) comprises a guide rail (38) and the cover part (20) comprises an engagement element (34), wherein the engagement element (34) is located in the guide rail (38) such that the engagement element (34) is translatorily movable along a guide rail direction, or
wherein the cover part (20) comprises a guide rail (38) and the steering column unit (14) comprises an engagement element (34), wherein the engagement element (34) is located in the guide rail (38) such that the engagement element (34) is translatorily movable along a guide rail direction (G).

7. The dashboard assembly (10) of claim 6, wherein the cover part (20) comprises at least two engagement elements (34) being arranged at a distance from each other, wherein the at least two engagement elements (34) are located in the guide rail (38) such that the at least two engagement elements (34) are translatorily movable along a guide rail direction (G), or
wherein the steering column unit (14) comprises at least two engagement elements (34) being arranged at a distance from each other, wherein the at least two engagement elements (34) are located in the guide rail (38) such that the at least two engagement elements (34) are translatorily movable along a guide rail direction (G).

8. The dashboard assembly (10) of claim 6 or 7, wherein the guide rail (38) comprises a push-out ramp (44) at one end of the guide rail (38), wherein the push-out ramp (44) is oriented towards the part comprising the engagement element (34).

9. The dashboard assembly (10) of any one of the preceding claims, wherein the cover part (20) and the dashboard body (12) are translatorily movable with respect to one another and wherein the cover part (20) and the dashboard body (12) are rotatably movable with respect to one another.

10. The dashboard assembly (10) of claim 9,
wherein the dashboard body (12) comprises a guide slot (52) and the cover part (20) comprises an engagement protrusion (48), wherein the engagement protrusion (48) is located in the guide slot (52) such that the engagement protrusion (48) is translatorily movable along a guide slot direction (S) and rotatable around an engagement protrusion axis (P), or
wherein the cover part (20) comprises a guide slot (52) and the dashboard body (12) comprises an engagement protrusion (48), wherein the engagement protrusion (48) is located in the guide slot (52) such that the engagement protrusion (48) is translatorily movable along a guide slot direction (S) and rotatable around an engagement protrusion axis (P).

11. The dashboard assembly (10) of any one of claims 9 and 10 and of any one of claims 5 to 8, wherein the guide slot direction (S) and the guide rail direction (G) are non-parallel.

12. A cover part (20) for a dashboard assembly (10) of any one of the preceding claims, wherein the cover part (20) comprises a first coupling interface (30) being configured to movably connect the cover part (20) to the steering column unit (14) and wherein the cover part (20) comprises a second coupling interface (46) being configured to movably connect the cover part (20) to the dashboard body (12) wherein the cover part (20) comprises a connection interface (26) for connecting a functional part (27) to the cover part (20), wherein the functional part comprises a camera unit (56) and/or a ventilation nozzle part.
